# EUROPÄISCHE PATENTSCHRIFT

(11) **EP 3 967 883 B1**
(45) Veröffentlichungstag und Bekanntmachung des Hinweises auf die Patenterteilung: **02.11.2022**
(21) Anmeldenummer: 21189510.7
(22) Anmeldetag: 03.08.2021
(51) Int. Cl.: F04D 29/044, F04D 29/046, F04D 3/00, F04D 13/06, F04D 29/02, F04D 29/52, F04D 29/60, F04B 23/02

(54) **PUMPWERK**
PUMPING MECHANISM
SYSTÈME DE POMPAGE

(30) Priorität: 15.09.2020 DE 102020124007
(43) Veröffentlichungstag der Anmeldung: 16.03.2022
(73) Patentinhaber: Lutz Pumpen GmbH, 97877 Wertheim (DE)
(72) Erfinder: Getze, Andrej, 97892 Kreuzwertheim (DE); Götz, Linus, 97900 Külsheim (DE); Röhl, Matthias, 63906 Erlenbach am Main (DE)
(74) Vertreter: Christ, Niko

(56) Entgegenhaltungen:
- DE-A1- 2 334 495
- DE-A1- 2 505 919
- GB-A- 651 619
- GB-A- 1 215 969
- JP-A- S57 163 198
- JP-A- 2001 220 605
- KR-B1- 101 715 604
- US-A- 5 441 390

## Beschreibung

Die vorliegende Erfindung betrifft ein Pumpwerk für eine Fass- oder Behälterpumpe, mit einem Pumpengehäuse und einer darin aufgenommenen, in einem Wellenführungsrohr an einem rotorseitigen Lager und einer Pumpwerkskupplung rotierbar gelagerten Antriebswelle.

Ein solches Pumpwerk ist bereits aus der DE 23 34 495 A1 vorbekannt. Hier wird eine Lagerung der Antriebswelle allerdings durch eine Mehrzahl von Stützlagern innerhalb eines Stützrohres geleistet. Kritische Schwingungen werden hierdurch verhindert, wobei jedoch die Antriebswelle die Stützlager kontaktiert, mithin durch diese gelagert ist.

Ebenfalls ist ein solches Pumpwerk aus der DE 25 05 919 A1 bekannt, welche eine Lagerschale aufweist, welche in ein die Antriebswelle umgebendes Stützrohr gezwängt ist und die Antriebswelle drehbar, aber spielfrei lagert.

Weiter ist auf die GB 1 215 969 A und die GB 651 619 A zu verweisen.

Derartige Pumpwerke sind bereits zahlreich aus dem Stand der Technik bekannt. Hierzu wird ergänzend auf die JP S57 163198 A, KR 101 715 604 B1, US 5 441 390 A und die JP 2001 220605 A hingewiesen.

Gerade bei Fass- oder Behälterpumpen ist aufgrund deren Funktionsprinzips die Antriebswelle deutlich länger als bei vergleichbaren anderen Strömungsmaschinen. Der aktuelle Stand der Technik sieht daher, gerade bei dichtungslosen Pumpwerken, eine mehrfache Lagerung der Antriebswelle innerhalb des Wellenführungsrohrs vor.

Allerdings werden dadurch sowohl der Anspruch an die Fertigungstoleranzen als auch der technische Aufwand deutlich erhöht. Besonders problematisch ist hierbei der Trockenlauf, der zu hohen Temperaturen in den Lagern führt, weil deren Temperatur nicht an das Medium abgegeben werden kann, während die Drehzahl aufgrund fehlender Last sehr hoch werden kann. Dies kann insbesondere durch spezielle Werkstoffe oder eine gekapselte Schmierung verhindert werden.

Die erste dieser beiden Lösung bedeutet höhere Materialkosten, während die zweite Lösung als kritisch anzusehen ist, weil das Schmiermittel insbesondere nach einem entsprechenden Verschleiß aus dem Lager austreten und das Medium kontaminieren kann.

Vor diesem Hintergrund wird der Trockenlauf derzeit im Stand der Technik als Fehlerfall bewertet und muss verhindert oder zumindest zeitlich stark eingeschränkt werden. Daher wird eine ständige Überwachung der Pumpe erfordert, um einen Trockenlauf zu erkennen und darauf zu reagieren. Gerade im Explosionsschutzbereich verschärft sich dieses Problem nochmals erheblich aufgrund der dortigen Anwendungen und der erforderlichen Zulassung der Pumpe.

Ausgehend von diesem Problem liegt der vorliegenden Erfindung die Aufgabe zugrunde, ein Pumpwerk zu schaffen, welches auch in einem Trockenlauf gefahrlos betrieben werden kann

Dies gelingt mit einem Pumpwerk gemäß den Merkmalen des unabhängigen Anspruchs 1. Weitere, sinnvolle Ausgestaltungen eines solchen Pumpwerks können den sich anschließenden abhängigen Ansprüchen entnommen werden.

Erfindungsgemäß ist vorgesehen, dass ein Pumpwerk, vorzugsweise das Pumpwerk einer Fass- oder Behälterpumpe, eine Antriebswelle in einem Wellenführungsrohr aufweist. Die Antriebswelle ist auf der Seite eines Pumpenantriebs über eine Pumpwerkskupplung gehalten, während sie auf der Seite des Dichtmoduls in einem Lager drehbar gelagert ist. Dieses Lager wird weiterhin als normales Lager verwendet und ermöglicht neben der reinen Lagerung der Antriebswelle auch, dass die Pumpe dichtungslos ausgeführt werden kann.

Im Unterschied zum Stand der Technik ist zwischen der Pumpwerkskupplung und dem Lager im Dichtmodul kein Zwischenlager angeordnet. Vielmehr sieht die Erfindung einen oder mehrere Stützringe vor, welche in das Wellenführungsrohr oder in das Dichtmodul eingebracht und dort so befestigt sind, dass die Antriebswelle durch den wenigstens einen Stützring hindurch verläuft. Hierbei weist der wenigstens eine Stützring einen Innendurchmesser auf, welcher größer ist als der Außendurchmesser der Antriebswelle, so dass die Antriebswelle, soweit diese sich im unbelasteten Zustand schwingungsfrei dreht, den Stützring nicht berührt. Erst wenn sich die Antriebswelle aufgrund der Drehgeschwindigkeit und Last aufschwingt und insbesondere eine Resonanzfrequenz erreicht, kontaktiert sie den wenigstens einen Stützring, der erst in dieser Situation dafür sorgt, dass die Antriebswelle nicht gegen das Wellenführungsrohr schlägt. Um die abhängig vom Betriebspunkt entstehende Schwingung zu dämpfen, wird zumindest ein Stützring im oberen Bereich des Dichtmoduls angeordnet.

Mit einer solchen Lagerung kommt es auch bei einem Trockenlauf nicht zu hohen Temperaturen, da eine Reibung in Zwischenlagern nicht auftritt. Eine Reibung am Stützring kann erst bei auftretender Schwingung Sowohl auf die zusätzlichen Zwischenlager, als auch auf die Verwendung von Schmiermittel oder besondere Werkstoffe kann daher verzichtet werden.

Mit besonderem Vorteil wird der Innendurchmesser des Stützrings so bemessen und gewählt, dass dieser um so viel größer ist als der Außendurchmesser der darin geführten Antriebswelle, dass die Antriebswelle den Stützring bei einem schwingungsfreien Lauf nicht berührt, sondern vielmehr erst im Fall eines Aufschwingens kontaktiert.

Weiter kann bevorzugtermaßen der Stützring im Wellenführungsrohr oder im Dichtmodul durch eine Presspassung befestigt sein. Soweit es sich bei dem Stützring um einen einfachen Hohlzylinder aus einem geeigneten Material handelt, entfallen hierdurch sowohl mechanische als auch chemische Verbindungsmittel.

Als bevorzugte Materialien für den Stützring kommen vor allem Kohle und Keramik in Frage, weil diese eine leichte Reibung erlauben, eine hohe Haltbarkeit aufweisen und im Bereich des Explosionsschutzes eingesetzt werden können um eine Funkenbildung zu vermeiden.

Schließlich kann es sinnvoll sein, mehrere Stützringe in dem Wellenführungsrohr anzuordnen, welche in der Ruhestellung der Antriebswelle, beziehungsweise diese während eines schwingungsfreien Trockenlaufs nicht berühren. Auf diese Weise kann dem Auftreten einer Resonanzschwingung an unterschiedlichen Stellen von vornherein entgegengewirkt werden.

Die vorstehend beschriebene Erfindung wird im Folgenden anhand eines Ausführungsbeispiels näher erläutert.

Es zeigen
- Figur 1: ein erfindungsgemäßes Pumpwerk mit einer Antriebswelle, welche an einer Pumpwerkskupplung und in einem Lager im Dichtmodul gehalten ist und dazwischen lediglich mit Spiel durch einen Stützring hindurchläuft in einer seitlichen Querschnittsdarstellung,
- Figur 2: ein Detail der Figur 1 im Bereich des Dichtmoduls, mit im Wellenführungsrohr verpresstem Stützring, ebenfalls in seitlicher Querschnittsdarstellung, sowie
- Figur 3: eine Variante der Figur 2 mit einem im Dichtmodul verpressten Stützring, in seitlicher Querschnittsdarstellung.

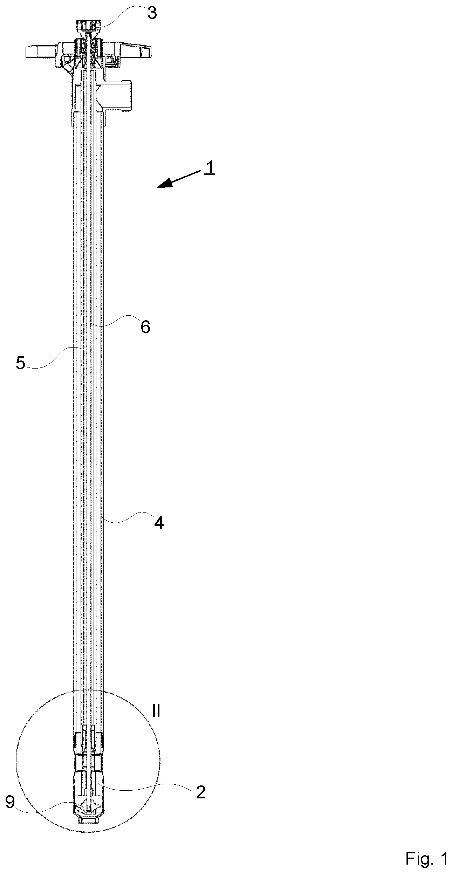

Figur 1 zeigt ein Pumpwerk 1, welches ein rohrförmiges Pumpengehäuse aufweist, in welchem eine von einem Wellenführungsrohr 5 umgebene Antriebswelle 6 aufgenommen ist. Ein derartiges Pumpwerk 1 kann für eine Fass- oder Behälterpumpe eingesetzt werden. In diesem Fall wird das Pumpwerk 1 von der Oberseite her in einen Behälter hinabgelassen, bis ein Dichtmodul 2 am freien Ende des Pumpwerks 1 im Bereich des so genannten Pumpensumpfes anlangt. Durch eine Rotation der Antriebswelle 6 mit einem Rotor 9, welcher endständig auf der Seite des Dichtmoduls 2 der Antriebswelle 6 drehfest anverbunden ist, wird das Medium in dem Behälter zwischen der Wand des Pumpengehäuses 4 und dem Wellenführungsrohr 5 hindurch aufwärts zu einem Auslass gefördert und dort zu einer Abfüllstelle verbracht. Als Antrieb kann ein hier nicht gezeigter Pumpenmotor eingesetzt werden, welcher mit der Pumpwerkskupplung 3 wirkverbunden wird.

Während des Betriebs des Pumpenmotors und der damit verbundenen Rotation der Antriebswelle kann es zum Trockenlauf kommen, also zu einer Rotation der Antriebswelle 6, ohne dass ein Medium im Pumpengehäuse 4 gefördert wird. Aufgrund des Verzichts auf Zwischenlager zwischen der Pumpwerkskupplung 3 und einem endständigen Lager 8 im Dichtmodul 2 wird bei einem Trockenlauf jedoch keine Reibungswärme an solchen Zwischenlagern erzeugt, so dass hierdurch das gezeigte Pumpwerk 1 auch im Trockenlauf betrieben werden kann. Soweit jedoch, sei es im Trockenlauf oder unter Last, die Antriebswelle 6 in Schwingungen gerät, schlimmstenfalls im Bereich der Eigenfrequenzen, die zu stehenden Wellen führen, so kann eine erhebliche Auslenkung der Antriebswelle auftreten und diese gegen die Wand des Wellenführungsrohrs 5 schlagen.

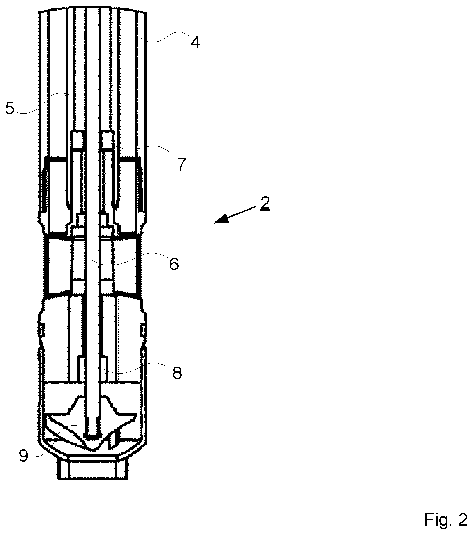

Dies vermeidet die Erfindung wie in Figur 2 näher dargestellt. Im Bereich des Dichtmoduls 2 ist die Antriebswelle 6 durch einen Stützring 7 geführt, welcher als Hohlzylinder aus Kohle oder Keramik ausgebildet und in das Wellenführungsrohr 5 eingepresst ist. Schwingt sich die Antriebswelle 6 auf, und auch nur dann, so schlägt sie gegen die Innenfläche des Stützrings 7, deren Innendurchmesser größer ist als der Außendurchmesser der Antriebswelle 6. So wird jede Reibung an dem Stützring 7 bei einem ruhigen Lauf vermieden, jedes Aufschwingen der Antriebswelle 6 jedoch gleichfalls, da der Stützring 7 bei einer gewissen Auslenkung der Antriebswelle 6 jede weitere Auslenkung verhindert.

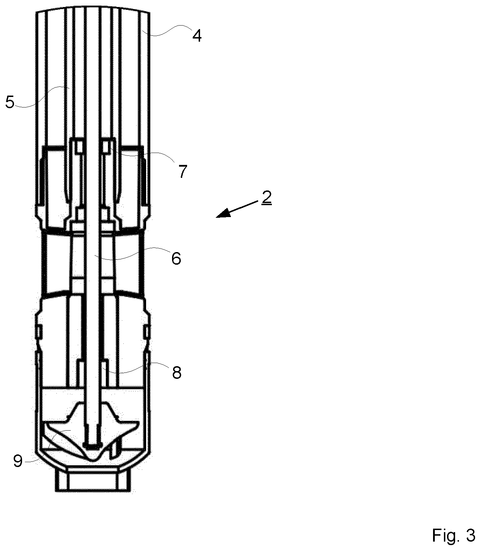

Figur 3 zeigt eine Variante der Figur 2, bei welcher der Stützring 7 nicht im Wellenführungsrohr 5, sondern in dem Dichtmodul 2 aufgenommen ist. Auch hier ist der Stützring 7 feststehend, während die Antriebswelle 6 sich frei drehen kann. Lediglich im Fall eines Aufschwingens der Antriebswelle 6 gerät diese mit dem Stützring 7 in Kontakt und eine Vergrößerung der Schwingung wird dadurch verhindert. Beide Lösungen können alternativ, oder soweit mehrere Stützringe 7 eingesetzt werden sollen, auch kumulativ verwendet werden.

Vorstehend beschrieben ist somit ein Pumpwerk, welches auch in einem Trockenlauf gefahrlos betrieben werden kann, ohne Lager aus speziellen Werkstoffen oder eine gekapselte Schmierung zu benötigen.

### BEZUGSZEICHENLISTE

- 1: Pumpwerk
- 2: Dichtmodul
- 3: Pumpwerkskupplung
- 4: Pumpengehäuse
- 5: Wellenführungsrohr
- 6: Antriebswelle
- 7: Stützring
- 8: Lager
- 9: Rotor

## Patentansprüche

1. Pumpwerk für eine Fass- oder Behälterpumpe, mit einem Pumpengehäuse (4) und einer darin aufgenommenen, in einem Wellenführungsrohr (5) an einem rotorseitigen Lager (8) und einer Pumpwerkskupplung (3) rotierbar gelagerten Antriebswelle (6),
**dadurch gekennzeichnet, dass** die Antriebswelle (6) zwischen dem Lager (8) und der Pumpwerkskupplung (3) im übrigen frei geführt ist, wobei die Antriebswelle (6) drehfrei durch einen gegenüber dem Pumpengehäuse (4) feststehenden Stützring (7) geführt ist, der einen Innendurchmesser aufweist, welcher größer ist als der Außendurchmesser der darin geführten Antriebswelle (6).

2. Pumpwerk gemäß Anspruch 1, **dadurch gekennzeichnet, dass** der Innendurchmesser des Stützrings (7) um so viel größer ist als der Außendurchmesser der darin geführten Antriebswelle (6), dass die Antriebswelle (6) den Stützring (7) bei einem schwingungsfreien Lauf nicht berührt.

3. Pumpwerk gemäß einem der Ansprüche 1 oder 2, **dadurch gekennzeichnet, dass** der wenigstens eine Stützring (7) in dem Wellenführungsrohr (5) aufgenommen, vorzugsweise eingepresst ist.

4. Pumpwerk gemäß einem der Ansprüche 1 oder 2, **dadurch gekennzeichnet, dass** der wenigstens eine Stützring (7) in einem Dichtmodul (2) aufgenommen, vorzugsweise eingepresst ist.

5. Pumpwerk gemäß einem der vorhergehenden Ansprüche, **dadurch gekennzeichnet, dass** das Lager (8) und/oder der wenigstens eine Stützring (7) aus einem Kohle- oder Keramikwerkstoff hergestellt ist.

6. Pumpwerk gemäß einem der vorhergehenden Ansprüche, **dadurch gekennzeichnet, dass** mehrere Stützringe (7) über die Länge des Wellenführungsrohrs (5) verteilt angeordnet sind.

## Claims

1. Pump mechanism for a drum or container pump, with a pump housing (4) and a drive shaft (6) accommodated therein and rotatably mounted in a shaft guide tube (5) on a rotor-side bearing (8) and a pump mechanism coupling (3),
**characterized in that** the drive shaft (6) is furthermore guided freely between the bearing (8) and the pump mechanism coupling (3), the drive shaft (6) being guided in a non-rotating manner by a support ring (7) which is fixed relative to the pump housing (4) and which has an inner diameter that is larger than the outer diameter of the drive shaft (6) guided therein.

2. Pump mechanism according to claim 1, **characterized in that** the inner diameter of the support ring (7) is so much larger than the outer diameter of the drive shaft (6) guided therein that the drive shaft (6) does not touch the support ring (7) during a vibration-free run.

3. Pump mechanism according to either claim 1 or claim 2, **characterized in that** the at least one support ring (7) is received in the shaft guide tube (5), preferably pressed in.

4. Pump mechanism according to either claim 1 or claim 2, **characterized in that** the at least one support ring (7) is received in a sealing module (2), preferably pressed in.

5. Pump mechanism according to any of the preceding claims, **characterized in that** the bearing (8) and/or the at least one support ring (7) is made from a carbon material or ceramic material.

6. Pump mechanism according to any of the preceding claims, **characterized in that** a plurality of support rings (7) are distributed over the length of the shaft guide tube (5).

## Revendications

1. Station de pompage pour une pompe vide-fût ou pompe submersible, comportant un carter de pompe (4) et un arbre d'entraînement (6) logé dans celui-ci et monté de manière à pouvoir tourner dans un tube de guidage d'arbre (5) sur un palier (8) côté rotor et un accouplement de station de pompage (3),
**caractérisée en ce que** l'arbre d'entraînement (6) est en outre guidé librement entre le palier (8) et l'accouplement de station de pompage (3), l'arbre d'entraînement (6) étant guidé de manière non rotative par une bague de support (7) fixe par rapport au carter de pompe (4) et qui présente un diamètre intérieur supérieur au diamètre extérieur de l'arbre d'entraînement (6) guidé dans celle-ci.

2. Station de pompage selon la revendication 1, **caractérisée en ce que** le diamètre intérieur de la bague de support (7) est beaucoup plus grand que le diamètre extérieur de l'arbre d'entraînement (6) guidé dans celle-ci, de sorte que l'arbre d'entraînement (6) ne vient pas en contact avec la bague de support (7) lors d'un parcours sans vibration.

3. Station de pompage selon l'une des revendications 1 ou 2, **caractérisée en ce que** l'au moins une bague de support (7) est logée, de préférence enfoncée, dans le tube de guidage d'arbre (5).

4. Station de pompage selon l'une des revendications 1 ou 2, **caractérisée en ce que** l'au moins une bague de support (7) est logée, de préférence enfoncée, dans un module d'étanchéité (2).

5. Station de pompage selon l'une des revendications précédentes, **caractérisée en ce que** le palier (8) et/ou l'au moins une bague de support (7) est réalisé en un matériau en carbone ou en céramique.

6. Station de pompage selon l'une des revendications précédentes, **caractérisée en ce que** plusieurs bagues de support (7) sont réparties sur la longueur du tube de guidage d'arbre (5).
